# EUROPEAN PATENT APPLICATION

(11) **EP 4 751 555 A1**
(43) Date of publication of application: **03.06.2026**
(21) Application number: 24216632.0
(22) Date of filing: 29.11.2024
(51) Int. Cl.: A01G 7/04

(54) **ELECTROMAGNET UNIT AND SYSTEM COMPRISING THE ELECTROMAGNETIC UNIT**

(71) Applicant: Elenovations AS, 4014 Stavanger (NO)
(72) Inventor: ALIRAMAEI, Rozalin, 4014 STAVANGER (NO); STRUB, Stefan, 8048 ZÜRICH (CH)
(74) Representative: Öberg & Sjöberg AB

(57) **Abstract**

An electromagnet unit for improving or promoting plant growth or development, the unit comprising:
- a plurality of electric conductors, wherein the plurality of conductors extend, or are arranged, in a XY-plane, the plurality of conductors comprises, or is composed of, a first set of conductors and a second set of conductors, wherein the first set of conductors extend in parallel and are distributed, or spread out, in a first pattern in the XY-plane, and the second set of conductors are distributed, or spread out, in a second pattern in the XY-plane,
- wherein the conductors of the first set are linear, or straight, and extend, or are arranged, in a first direction, or a Y-direction, of the XY-plane, and
- wherein the conductors of the second set are composed of a first part that extends in the first direction, and a part that extends in a second direction, or X-direction,
- wherein the second direction is transverse to, the first direction,
wherein the first pattern is super positioned the second pattern, and together define, or form, combined pattern, in the XY-plane,
- wherein the conductors are electrically insulated from one another in the combined pattern,
- wherein the conductors are configured to be operationally coupled to an electric power source for generating a current in each of the conductors.

## Description

### Technical field

The proposed technology relates generally to the field of devices for cultivation, or growth promotion of plants. Further, the proposed technology relates specifically to the field of systems for promoting plant cultivation in a plurality of plants.

### Background

The Earth's magnetic field (MF) is an environmental factor that is present in all ecosystems. It is known to influence many biological processes. The MF varies between different locations around the globe.

In the 1960's came the first reports about the influence of the Earth's magnetic field on plants. It is well documented that magnetic fields can be used to influence plant growth cycles. For example, plants can be stimulated to increase the quantity and quality of yields.

M. E. Maffei "Magnetic field effect on plant growth, development, and evolution" in Frontiers in Plant Science, September 2014, vol 5, article 445, describes that the geomagnetic field is a natural component of our environment. The scientific paper concludes that plants receive and respond quickly to varying MF by altering their gene expression and phenotype.

US 8,667,732 B2 discloses a method for the treatment of plants using electromagnetic fields. The method consists in applying pulse sequences to growing plants or seeds in a pulsed electromagnetic field by means of a pulse generator.

Accordingly, there is a need for a device and a system that improves the growth rate, and plant growth development, of plants.

### Object

The proposed technology aims at, at least partly, alleviating the aforementioned disadvantages and failings of previously known devices, methods and systems for promoting plant growth by providing an electromagnet unit and system comprising the unit for generating a plant growth promoting magnetic field.

### Summary

According to the proposed technology at least the primary object is attained by means of an electromagnet unit having the features defined in the independent claim. The primary objective is further attained by a system comprising a power supply and the electromagnet unit. Preferred embodiments of the proposed technology are further defined in the dependent claims.

According to a first aspect of the proposed technology, there is provided an electromagnet unit for improving or promoting plant growth or development is proposed, the electromagnet unit comprising: a plurality of electric conductors, wherein the plurality of conductors extend, or are arranged, in a XY-plane, wherein the plurality of conductors comprises, or is composed of,
a first set of conductors and a second set of conductors, wherein the first set of conductors extend in parallel and are distributed, or spread out, in a first pattern in the XY-plane, and the second set of conductors are distributed, or spread out, in a second pattern in the XY-plane,
   - wherein the conductors of the first set are linear, or straight, and extend, or are arranged, in a first direction, or a Y-direction, of the XY-plane, and
   - wherein the conductors of the second set are composed of a first part, or portion, that extends in the first direction, or Y-direction, and a second part, or portion, that extends in a second direction, or X-direction,
   - wherein the second direction is transverse to, the first direction,
wherein the first pattern is superpositioned, or overlayed, or stacked onto, the second pattern, to define, or form, a combined pattern, in the XY-plane,
   - wherein the conductors of the first set of conductors and the second set of conductors are insulated from one another, or the conductors of the first pattern and the conductors of the second pattern, are electrically insulated from one another in the combined pattern,
   - wherein the conductors are configured to be operationally coupled to an electric power source for generating a current in each of the conductors.

It is understood that the current generated in each conductor forms a magnetic field, and that the generated magnetic field is a combination of the magnetic fields from the individual conductors. The generated magnetic field is thus an artificial magnetic field, separate and/or distinct from the earth's magnetic field. It is understood that the generated magnetic field and the earth's magnetic field together form a joint, or combined, magnetic field.

It further is understood that the joint, or combined, or resulting magnetic field improve or promote plant growth, or development during at least some of the development stages of the plant. A plant may refer to either the adult plant, seedling or seeds.

It is understood that when current flows through the conductors of the first set of conductors and the conductors of the second set of conductors, a magnetic field is generated. It is understood that the generated magnetic field may have a component in the Z-direction. In addition, the magnetic field may have a component in the XY-plane. Worded differently, the system with the electromagnet unit may provide a magnetic field in Z-direction, the X-direction as well as in the Y-direction.

The plant may be grown, or cultivated, in a growth medium, and the growth medium may be contained in a container, or a growth medium support, such as a pot. The growth medium support with the plant may thus be placed onto, or on top, of the electromagnet unit. The term growth medium support is to be understood to encompass pots, trays, and cultivation boxes that are readily available for plant cultivation. Worded differently, the growth medium may be supported, or contained, by the growth medium support.

The term growth medium is to be understood as a medium that supports a plant, and in particular the roots of a plant. A plant with roots supported in the growth medium may be referred to as a rooted plant. The growth medium may thus provide nutrients and water to the plant. The growth medium may be soil, or perlite in hydroponics. The growth medium support may be of a non-magnetic material, such as a plastic or ceramic material. The non-magnetic material may be diamagnetic material. The non-magnetic material is understood to be a non-paramagnetic or non-ferromagnetic material. It should further be pointed out that the growth medium support could have any shape that allows for supporting a growth medium, such a cylinder, a box, etc.

It is specified above that the electromagnet unit has a plurality of conductors that extend, or are arranged, in a XY-plane. Worded differently, the plurality of conductors may extend, or are arranged, or lie, in, and define an XY-plane. It is understood that an XY-plane is planar. For example, the electromagnet unit can be placed on a horizontal surface with a plant positioned on top of, or onto, the electromagnet unit. It is further understood that the electromagnet unit, and the conductors are configured to be operationally coupled to an electric power source for generating a current in each of the conductors. Thereby a magnetic field is produced in a Z-direction, above the XY-plane, that improves, or promotes, plant growth, or plant development. It is understood that the X-direction is transverse to the Y-direction, and that the Z-direction is transverse to the XY-plane. A coordinate system may thereby be defined by the X-direction, the Y-direction and the Z-direction, and the coordinate system may be a Cartesian coordinate system.

The electromagnet unit may define, or form, or have a lower side that has a lower surface and an upper side that has an upper surface. The upper side may be located, or arranged, opposite the lower side. The upper side, and upper surface, may be adapted to support a plant, or pot, or growth medium. The lower side, or lower surface, adapted to be placed on a horizontal surface or plane, such as a support, or the ground.

The unit may be rectangular or square. Worded differently, the electromagnet unit may outline a rectangle or a square. The unit may have, or define, a first side, a second side, a third side and a fourth side. Worded differently, the lower side and the upper side of the electromagnet unit may define a first edge, a second edge, a third edge and a fourth edge, wherein the edges together outline the upper side and lower side.

The first side, the second side, the third side and the fourth side may be transverse to the upper side or upper surface, and/or the lower side or the lower surface. The first side and the second side may be arranged on opposite ends of the upper side. The third side and the fourth side may be arranged on opposite sides of the upper side. Worded differently, the firs side and the second side may be transverse to the third side and the fourth side.

A first direction of the XY-plane may be defined by the third side or the fourth side. A second direction of the XY-plane may be defined by the first side or the second side.

The upper side and the lower side may define a thickness of the unit.

It is specified above that the electromagnet may comprise a first set of conductors and a second set of conductors. The first set of conductors and the second set of conductors may be arranged on, or in, a substrate. Worded differently, the electromagnet may comprise a substrate, and the first set of conductors and the second set of conductors may be arranged on, or in, the substrate. The substrate may be a flexible support sheet. The first set of conductors and the second set of conductors may be arranged between a first and a second flexible support sheet. The electromagnet unit may thus comprise a first flexible support sheet and a second flexible support sheet and the first set of conductors and the second set of conductors may be arranged between the first flexible support sheet and the second flexible support sheet. The first flexible support sheet and the second flexible support sheet may thus form the substrate. The first and second support sheet may be laminated to each other, to enclose the conductors of the first set of conductors and/or the second set of conductors.

It is specified above that the substrate may be a flexible substrate. The flexible substrate may be a mat. The flexible substrate may be made of a polymer or plastic material. The substrate may then more easily conform to the shape of the ground, or surface, the electromagnet unit is placed on, or onto.

It is specified above that the electromagnet may define, or form, or have a lower side that has a lower surface and an upper side that has an upper surface. It is also specified that the upper side and the lower side may define a thickness of the electromagnet unit. Worded differently, the electromagnet unit may have a thickness, and the thickness may be measured transverse, between the upper side, or surface, and the lower side, or surface. The thickness in the range of 1-15 mm, such as 1-10 mm, or preferably about 1 mm. This means that the substrate has a thickness in the range of 1-15 mm, such as 1-10 mm, or preferably about 1 mm.

It is specified above that the electromagnet unit has a first set of conductors and a second set of conductors. It is understood that a conductor allows the flow of charge (electric current) in one or more directions. It is further understood that a conductor has a resistance, or electrical resistance, that is a measure of the conductor's opposition to the flow of electric current. The conductors may be configured to be operationally coupled to an electric power source for generating a current in each of the conductors, and from the current generate a magnetic field.

It is specified above that the substrate may have a thickness, and that the thickness may be in the range of 1-15 mm, such as 1-10 mm, or preferably about 1 mm. It is further understood that the conductors may be flat conductors, or traces and that the conductors may have a thickness. The thickness of the conductors may be measured in the same direction as the thickness of the electromagnet unit, or parallel to the thickness of the electromagnet unit. The thickness of the conductors may be at least 0.075mm, preferably in the range of 0.1-1 mm. It is understood that the thickness of the conductors is less than the thickness of the substrate when the electromagnet unit comprises the substrate.

It is further understood that the conductors may form, or have, a circular cross-section. Alternatively, the conductors may form, or have a rectangular or square, cross-section. The conductors may comprise, or form, traces.

It is specified above that the conductors of the first set of conductors are linear, or straight, and extend in the XY-plane. Worded differently, the conductors of the first set of conductors may extend in the XY-plane, from the first side to the second side of the unit. Alternatively, the first set of conductors may be substantially straight and vary periodically around a centerline, and the center line may be parallel with the third side or the fourth side. For example, the conductors of the first set of conductors may be wavy, or periodic, or otherwise shaped conductors, that may have an extension direction along the conductors that varies from end-to-end of the conductor.

It is specified above that the plurality of conductors comprises, or is composed of, a first set of conductors, or first conductors, and a second set of conductors, or second conductors.

A set of conductors may also be referred to as a group of conductors, or a plurality of conductors. The set of conductors may be formed by electrical conductors, wires or cables being of the same type. Alternatively, the set of conductors may be formed by conductors of different size or having different cross-sectional areas. Worded differently, the set of conductors may have different properties, such as resistance. The set of conductors may be made of the same electric current conducting material, such as copper, aluminium or steel. Worded differently, the conductors of the first set may be the same as the conductors of the second set.

This is particularly advantageous in combination with the electric conductors of the first set and the second set are respectively coupled in parallel, as it allows for the shape of the magnetic field to be determined primarily by the density, or spacing, of the conductors in the combined pattern. Worded differently, the arrangement of conductors in the combined pattern may influence the magnetic field that is generated. When the conductors are the same type, length, cross-sectional area and of the same material, the same currents, or equal current, will flow through each conductor. The electromagnet unit may be manufactured using the same type of conductors, simplifying manufacturing.

Alternatively, the set of conductors may be made from different conducting material with different material properties.

It is understood that each conductor of the first and second set may be configured to carry a current in the range of 0,01-10A, preferably in the range of 0. 01-8A, more preferably in the range of 0.01-6A. In one example, the currents may be in the range of 0.01-3A. Preferably the voltage is below 50V. Thus, the potential hazard of coming into contact with a person, and thereby shorting out an exposed conductor is reduced.

It is further understood that each conductor of the first and second set may have, or be configured to have, a resistance per meter below 0.3 Ohm/m, preferably below 0.03 Ohm/m, more preferably, below 0.003 Ohm/m. It is understood that a conductor with low resistance per unit length, or per meter, reduces losses in the electromagnet unit. Such losses result in undesired heating of the conductors and the electromagnet unit. By reducing the resistance of the conductors, the losses are further reduced leading to decreased heating and a more efficient electromagnet unit. Compared to heating systems for underfloor/floor heating, or heating mats, the conductors of the first and second set has a resistance per length unit, or per meter, being below that used for the technical purpose of providing heat.

It is further understood that the resistors may be selected, or chosen, in combination with the applied voltage over the conductors to achieve the above resulting currents in the conductors.

The conductors are thus preferably in a low resistivity material such as copper or aluminium. The conductors may also be steel conductors. Alternatively, steel conductors having a cross-sectional area larger than a corresponding aluminium or copper conductor may be used, to compensate for the higher resistivity of steel conductors. In a further alternative, the conductors may be formed by conductive particle suspended in a fluid, or solvent, to form an ink. It is understood that conductive ink is an ink that results in a printed object which conducts electricity and that it is typically created by infusing graphite or other conductive materials into ink. The conductive particles may be metal particles, comprising silver, or may be non-metal particles, comprising graphite. The conductors may then be formed, or produced, by applying conductive ink to a substrate.

It is understood that a conductors may have a circular, or round, cross section. Alternatively, a conductors may have a rectangular cross section. For example, a conductor may be a flat conductor, or flat conductor lead.

It is specified above that the conductors of the first set extend in the XY-plane. The conductors of the first set may extend in parallel, or essentially in parallel. Worded differently, the conductors, or each conductor, of the first set may be arranged, or extend, in parallel and be non-overlapping, in the XY-plane. This means that the conductors of the first set extend in the same direction, such as between the first side and the second side of the unit, and that each first conductor does not intersect or overlap another conductor of the first set of conductors, in the XY-plane. Each conductor of the first set of conductors may extend between the first side and the second side.

It is understood that a conductor that overlaps another conductor, extends over, or pass over, and partly covers a part of the other conductor at the overlap. It is further understood that when two conductors are straight, or linear, and the one conductor overlaps the other conductor, the two conductors are not parallel, at least at the overlap.

It is further understood that a conductor may be aligned, or parallel, to a second conductors. A first conductor may thus be parallel and positioned, or stacked, above a second conductors. Alternatively, a first conductor and a second conductor may be abreast.

The first set of conductors may extend in the XY-plane, parallel to a third or fourth side of the unit. Worded differently, the first set of conductors may extend in the XY-plane, transverse to the first or second side of the unit. The conductors of the first set may be abreast. A conductor of the first set of conductors may be arranged at a distance from an adjacent, or neighboring, conductor of the first set of conductors. Worded differently, each conductor of the first set may be spaced apart from a closest further conductor of the first set of conductors. The space between closest conductors of the first set of conductors may be constant. This means that each conductor of the first set of conductors is spaced apart from the closest other conductor of the first set of conductors by a distance, and that the distance is the same for each conductor of the first set of conductors. Alternatively, the distance may vary, or not be constant, between conductors.

The conductors of the first set of conductors may be arranged to be electrically coupled in parallel. Worded differently, the electric current in each first set of conductors may flow in the same direction. Each conductor of the first set of conductors may have a first connector and a second connector. The first connector may be arranged at the first end of each conductor, and the second connector may be arranged at the second end, or opposite end, of each conductor. Worded differently, each conductor of the first set of conductors may have a first connector arranged at the first side of the electromagnet unit, and a second connector arranged at the second side of the electromagnet unit.

Alternatively, the first connector, or connector lead, and the second connector, or connector lead, may be coupled, or connected, to more than one conductor. Worded differently, each conductor of the first set of conductors may share a first connector and a second conductor. This allows for one connector, or connector lead, to connect the power source to more than one conductor of the first set of conductors without the need for each connector to have an individual first connector, or connector lead, and/or second connector, or connector lead.

The number of conductors of the first set may be at least two conductors. This means that the first set of conductors has a first outermost positioned conductor and a second outermost positioned conductor. The first outermost positioned conductors and the second outermost positioned conductors are thus the furthest spaced apart conductors of the first set.

Alternatively, number of conductors of the first set of conductors may be in the range of 2-18, such as 2-8, or more preferably, 2-6, such as 4. Preferably the number of conductors of the first set are equal to or higher than 2, more preferably more than 3, most preferably, more than 4. Modifying the number of conductors may thus allow for the magnetic field provided by the conductors of the first set of conductors to be changed. Alternatively, the current for individual conductors of a set of conductors, such as the conductors of the first set of conductors or the second set of conductors, may be varied, or adjusted, to change, or alter the resulting magnetic field of the electromagnet unit.

For example, each conductor of a set of conductors may be individually coupled to the power source.

The conductors of the first set may have the same length. The conductors of the first set may have the same width in the XY-plane. Worded differently, each conductor of the first set may have the same diameter. Alternatively, the outermost conductors of the first set of conductors may have a length, or a width, or cross-sectional area, that differs from the other conductors of the first set. This may allow for the magnetic field component of the outermost conductors of the first set of conductors to be adjusted, and/or stronger, than the remaining, and between the outermost conductors arranged further conductors, of the first set of conductors.

The conductors of the first set of conductors may be flat conductors as specified above. In one example, the flat conductor is between 5-20 mm wide, preferably about 15 mm wide, and have a thickness in the range of 0.1 mm to 0.8 mm, preferably in the range of 0.1 mm to 0.5 mm..

The conductors of the second set may extend, or be arranged, in the first direction, or Y-direction and the second direction, or X-direction. The conductors of the second set of conductors extend fully, or at least partly, in parallel. Worded differently, the conductors, or each conductor, of the second set may be arranged, or extend, in the XY-plane, such that the conductors of the second set do not intersect, or overlap, other conductors of the second set of conductors. The conductors of the second set of conductors may extend from a first side to a second side of the electromagnet unit. The conductors of the second set of conductors may be arranged to have a portion, or part, extending in the same direction as the conductors of the first set of conductors.

The conductors of the second set may extend between a first connector, or connector lead, and a second connector, or connector lead. This means that the conductors are unbroken, and may conduct current, between the first connector, or connector lead, and the second connector or connector lead. The conductors of the second set may extend in a first direction and a second direction. This means that the conductors of the second set may comprise a first portion, or intermediate portion, that extends in the first direction and a second portion, or end portion, that extends in the second direction. Thereby an improved magnetic field may be generated by the conductors of the second set in both the first direction, or Y-direction, and the second direction, or X-direction. The first connector, or connector lead, and the second connector, or connector lead, may be located, or positioned about a central axis of the electromagnet unit. The central axis may be parallel to the Y-direction. Worded differently, the central axis may be parallel to the extension direction of the conductors or the first set of conductors. Worded again different, the central axis may be parallel to the third side and the fourth side of the electromagnet unit. It is understood that the central axis may be seen as dividing the electromagnet unit into two equal sized portions.

The first portion, or intermediate portion may be linear, or straight. The second portion, or end portion, may be linear, or straight.

Each conductor of the second set may comprise a first portion, or intermediate portion, that extends in the first direction and two second portions, or end portions, arranged on, and connected to an end of the first portion, or intermediate portion. As specified above, the conductors of the second set may thus extend in both the first direction, or Y-direction, and the second direction, or X-direction. Each second portion, or end portion, may have a further end, arranged opposite the connection to first portion, or intermediate portion, that forms the connector, or connector lead, of each conductor of the second set. The two second portion, or end portion, may extend and be parallel, or abreast, in the XY-plane. This is advantageous when two electromagnet units are coupled, or connected, in that the currents of each first end portions, will flow in opposite directions and the resulting magnetic field resulting from the currents in the end portions of the two connected electromagnet units will at least partially cancel each other out. Thereby an improved magnetic field may be achieved.

The second portion, or end portion, of a conductor of the second set of conductors may overlap one or more conductors of the first set of conductors.

It is understood that when a conductor of the second set of conductors overlaps a conductor of the first set of conductors, one of the conductors extend over, cross, or partly covers, the other conductor.

The first portion, or intermediate portion, of each conductor of the second set of conductors may be abreast, or parallel, and may further be parallel with the conductors of the first set of conductors.

The conductors of the second set may be in the range of 2-18, such as 2-8, or more preferably, 2-6, such as 4. The number of conductors of the second set may be the same as the number of conductors of the first set. Preferably the number of conductors of the second set are equal to or higher than 2, more preferably more than 3, most preferably, more than 4. Modifying the number of conductors may thus allow for the magnetic field provided by the conductors of the first set of conductors to be changed. The conductors of the first set may have the same length. The conductors of the second set of conductors may be flat conductors. In one example, each flat conductor is between 5-20 mm wide, preferably about 15 mm wide, and have a thickness in the range of 0.1 mm to 0.8 mm, preferably in the range of 0.1 mm to 0.5 mm.

The conductors of the second set may have the same width in the XY-plane. Worded differently, each conductor of the first set may have the same diameter.

Each conductor of the second set of conductors may have a width, or cross-sectional area, that differs from the other conductors of the second set. Alternatively, the width, or cross-sectional area may be the same for all conductors of the second set.

It is specified above that the unit comprises a first set of conductors and a second set of conductors. The electromagnet unit may further comprise a third set of conductors. The conductors of the third set of conductors may share properties with the conductors of the first set of conductors or the second set of conductors. The conductors of the third set of conductors may extend in the XY-plane.

Worded differently, the conductors, or each conductor, of the third set may be arranged, or extend, in parallel and be non-overlapping, in the XY-plane. Each conductor of the third set of conductors may extend between the first side and the second side.

It is further understood that the conductors of the first set may be coupled in parallel and that the conductors of the second set may be coupled in series.

This means that the current direction, or direction of current flow, relative to the XY-plane is the same in all of the conductors of the first set. Worded differently, the current direction, or direction of current flow, relative to the XY-plane, for all of the conductors of the first set of conductors is from the first side to the second side of the unit.

In one alternative, a second connector, or connector lead, of a first conductor of the second set of conductors may be coupled, or connected, to a second connector, or connector lead, of a second conductor of the second set of conductors. An unbroken, electrical circuit may thus be formed wherein between the first connectors, or connector leads, of the first conductors and the second conductor of the second set of conductors. This also means that the current direction, or direction of current flow, for half of the conductors of the second set of conductors, in the XY-plane, is from the first side to the second side of the unit, and half of conductors of the second set of conductors is from the second side to the first side.

Alternatively, the conductors of the first set may be coupled in series and the conductors of the second set may be coupled in parallel. This means that each conductor of the first set of conductors is individually coupled to the electrical power source. It also means that a second connector, or connector lead, of a first conductor of the first set of conductors may be coupled, or connected, to a second connector, or connector lead, of a second conductor of the first set of conductors.

In a further alternative, the conductors of the first set and the conductors of the second set may be coupled in either parallel or series relative to another conductor of the first set conductors and the second set of conductors, respectively. In addition, coupling the conductors of a set, in series allows for a first joint, or shared, connector, or connector lead, and a second joint, or shared, connector, or connector lead, to be used for connecting, or coupling, a power supply to the unit. Thus, only two connectors are needed to electrically form a closed electrical conduit for all of the conductors of a set of conductors.

Alternatively, when the electrical properties such as resistance is the same for all of the conductors of a set of conductors, and the conductors are coupled in parallel, equal currents may flow through all of the conductors of the set. Further benefits may involve reduced points of failure, which in turn improves life and uptime of the unit. Reducing the number of connectors further reduce dangers to persons handling the electromagnet unit, since fewer points of connection between the power source and the conductors may be exposed to short circuiting. When the electrical properties such as resistance is the same for all of the conductors of a set of conductors, this provides for the same current to flow through each conductor of the set, and by flowing in the same direction, the magnetic field component from one conductors does not interfere, or has a magnetic field component with an opposite direction, of another conductors of the same set of conductors.

It is further specified above that the electromagnet unit may further comprise a third set of conductors. The conductors of the third set of conductors may extend in parallel and are distributed, or spread out, in a third pattern in the XY-plane. The conductors of the third set may extend, or may be arranged, transversely to and overlap the conductors of the first set or the second set.

Alternatively, the conductors of the third set may extend at an angle to the conductors of the first and second set. For instance, the conductors of the third set may extend at a 45-degree angle compared to the conductors of the first or second set.

The conductors of the third set of conductors may extend in parallel between two conductors leads. The conductors of the third set may thus be connected, or coupled, in parallel. Alternatively, the conductors of the third set of conductors may be connected, or coupled, in series. This configuration may allow for an even more improved control, or adjustment, of the generated homogenous magnetic field of the electromagnet unit.

It is understood that a pattern relates to the number of, and the spacing between, conductors of a set of conductors. By distributed, or spread out, is referred to the distance or spacing between the conductors of a set of conductors. For example, when the first set comprises a first, a second and a third conductor, distribution refers to the distance between the first and second conductors, and the distance between the second and third conductor.

It is specified above that the first set of conductors may extend in parallel and be distributed, or spread out, in, or to form, a first pattern in the XY-plane. It is also specified above that the conductors of the second set of conductors may be distributed, or spread out, in, or to form, a second pattern in the XY-plane. It is also specified that the first pattern may be superpositioned, or overlaid, the second pattern, and together define, or form, a combined pattern, in the XY-plane. The first pattern may thus be formed separate from the second pattern. For example, the first pattern may comprise conductors of the first set of conductors applied to a first carrier sheet, or layer and the second pattern may comprise conductors of the second set of conductors applied to a second carrier sheet, or layer. The first carrier sheet and the second carrier sheet may be manufactured separately. In a further step, the second carrier sheet may be attached, or arranged to, the first carrier sheet and together form a combined pattern of conductors. The magnetic field provided by a unit may thus be altered by altering one of the carrier sheets.

It is specified that each conductor of the first set of conductors may be electrically insulated from one another in the first pattern. It is further specified that each conductor of the second set of conductors may be electrically insulated from one another in the second pattern. It is further understood that each conductor of the first pattern of conductors may be electrically insulated from each conductor of the second pattern. Worded differently, the conductors forming the combined pattern are electrically insulated from each other.

The second pattern may be arranged in a corresponding manner, comprising conductors, distributed, or spaced apart, forming the second pattern. The distance between adjacent conductors may be the same, or uniform. Alternatively, the distance between conductors may be non-uniform, or is varied, thereby forming different second pattern distribution densities in areas of the second pattern.

It is specified above that the first set of conductors may extend in parallel and be distributed, or spread out, in, or to form, a first pattern in the XY-plane. It is also specified above that the conductors of the second set of conductors may be distributed, or spread out, in, or to form, a second pattern in the XY-plane. In a further embodiment, the third set of conductors may extend in parallel and be distributed, or spread out, in, or to form, a third pattern in the XY-plane. The third pattern may be superpositioned, or overlaid, or stacked onto, the first pattern and the second pattern, and together define, or form, an alternative combined pattern, in the XY-plane. This means that the combined pattern may be formed by the first set of conductors, the second set of conductors and the third set of conductors. This may provide a homogeneous magnetic field for plant cultivation as discussed above. The conductors of the third set of conductors may be arranged, or extend, parallel to and overlap the conductors of the first set of conductors and/or the second set of conductors.

In a further alternative embodiment, the conductors of the second set of conductors may be linear, or straight, and extend transverse to the conductors of the first set of conductors of the first set of conductors, and each conductor of the second set of conductors may overlap, or cross, one or a plurality of conductors of the first set of conductors. The first pattern and the second pattern may then jointly define, or form, a combined pattern in the form of a grid, in the XY-plane. It is understood that the grid forms a delimited area, or surface, in the XY-plane. The conductors may be electrically insulated from one another in the grid.

It is understood that the plurality of conductors of the first set of conductors and second set of conductors that forms the first pattern or forms the second pattern may comprise two outermost arranged conductors. This means that any further conductors of the pattern are arranged, or distributed, between the two outermost arranged conductors. For example, the conductors of the first set of conductors may comprise two outermost arranged conductors, and the conductors of the second set of conductors may comprise two outermost arranged conductors.

Wording the outermost arranged conductors differently, the two outermost conductors may be the furthest spaced apart conductors of the set of conductors that forms the pattern.

The outermost arranged conductors of the first set of conductors may be positioned, or arranged, about, or close to, the first side and second side, respectively.

The outermost arranged conductors of the second set of conductors may have a first portion, or intermediate portion, that is positioned, or arranged, about, or close to, the third side and fourth side, respectively.

The conductors distributed between the outermost conductors may be non-uniformly distributed, wherein the distance between adjacent conductors is non-uniform, or is varied. The distance between conductors of a set, may decrease in an area about, or adjacent, the outermost conductors. The density of conductors, or conductor distribution density, in this area may thus be said to be higher, or denser, compared to other areas of the first pattern.

Alternatively, the conductors distributed between the outermost conductors may be uniformly distributed, wherein the distance between adjacent conductors is uniform, or is constant, or the same.

It is further understood that the first pattern may be formed by an outer first and second quarter portion, and two inner quarter portions. The first and second quarter portions may be arranged externally, or outwardly, in relation to the two inner quarter portions, in the first pattern.

The outermost arranged conductors may be located, or positioned, in the outer first or second quarter portions. The outer first quarter portions of the first pattern may thus be parallel to, or aligned with, the respective outermost arranged conductors of the first set of conductors.

The inner portions may be arranged between the outer first and second quarters portions in the grid. The number of conductors of the first or second quarters portions may be higher than the number of conductors of the inner quarter portion, or portions. The first or second quarter portions may then be said to have a higher density of conductors compared to the inner quarter portions.

Alternatively, the number of conductors of the first or second quarters portions may be the same as the number of conductors of the inner quarter portion, or portions. The first or second quarter portions may then be said to have the same, or equal, density of conductors compared to the inner quarter portions. In one example, the inner quarter portions may each comprise one conductor and the first and second quarter portion may each comprise one conductor. This provides for an increased magnetic field control, and a higher density of the magnetic field along the outer portions of the first pattern, reducing border effects on the magnetic field.

The first pattern may form a rectangular area limited by the two outermost positioned conductors of the first pattern and by outermost conductors of the second pattern. The first pattern may be construed as being divided into, or formed by, four equally large portions, or areas, formed by the quarter portions. The quarter portions may each comprised a quarter, or 25% of the area of the first pattern.

It is further understood that the second pattern may be formed by an outer first and second quarter portion, and two inner quarter portions. The inner quarter portions being arranged between the outer first and second quarters portions. The number of conductors of the first or second quarters portions may be higher than the number of conductors of the inner quarter portion, or portions.

Arranging the second pattern in a manner similar as the first pattern has the same benefits regarding the increased magnetic field control, and higher density of the magnetic field along the outer portions of the first pattern, thereby reducing border effects on the magnetic field.

Alternatively, the number of conductors of the second pattern, positioned, or located, in the first or second quarters portions may be lower than the number of conductors of the second pattern, positioned, or located, in the inner quarter portion, or portions.

It is specified above that electromagnet unit may comprise a first set of conductors and a second set of conductors and that the first set of conductors may form a first pattern and the second set of conductors may form a second pattern. It is also specified above that the electromagnet may comprise a substrate. The first and second pattern may be arranged on, or in, the substrate. Worded differently, the combined pattern may be arranged to, or in, or on, the substrate. The combined pattern may form a rectangular or square shape wherein the outermost arranged conductors of the first set of conductors and the second set of conductors define the edges of the rectangular or square shape. The combined pattern may have an area smaller than the area of the substrate. The combined pattern may cover 70-90% of the area of the substrate. The combined pattern may be arranged between a first and a second flexible support sheet. The first and second support sheet may be laminated to enclose the conductors of the combined pattern.

It is specified above that each conductor of the first set of conductors and the second set of conductors may have a first connector, or connector lead, and a second connector or connector lead. Each conductor may thereby be individually coupled, or connected, to the power source.

It is specified above that the conductors of the first set of conductors may be electrically coupled in parallel. The first set of conductors may then be coupled, or connected, to a shared, or joint, first connector, or connector lead, and a shared, or joint, second connector, or connector lead. The first connector and second connector may form a lead that extends, or is arranged in the first pattern, along a first side of the unit. Each lead may further comprise an electric connector that connects, or interfaces with an electric cable, or wire. For example, the electric connector may be formed by a plug connector, that has a female and a male end that interfaces to form the plug connector. Other examples of electric connector may be a screw connector, or screw terminal, or a blade connector.

Alternatively, the first set of conductors may be individually coupled, or connected, to an electric first connector, or connector lead, and an electric second connector, or connector lead. Each first connector, or connector lead, and second connector, or connector lead, may then be formed by an individual electric connector.

It is understood that the combined pattern, formed by the first pattern superimposed, or overlaid, the second pattern, may have a width w1, measured in the X-direction, or transverse the conductors of the first set conductors. The combined pattern, formed by superimposing of the first pattern on the second pattern, may have a length 11, parallel to the conductors of the first set of conductors, or in the Y-direction. The width w1 may be measured parallel to the first side or the second side of the unit.

It is understood that two or more electromagnets may be coupled, or connected, together, and share an electric power source. Alternatively, each electromagnet unit may be coupled to, or connected to, a separate, or individual, power source. In one embodiment the conductors of the first set of conductors of a first electromagnet unit may be coupled, or connected, to the conductors of the first set of conductors of a second electromagnet unit. The two electromagnet units may be placed, or positioned, next to each other and for a larger surface area for placing additional plants.

In the same embodiment, the conductors of the second set of conductors of the first electromagnet unit may be coupled, or connected, to the conductors of the second set of conductors of a second electromagnet unit.

A third electromagnet unit may in turn be coupled, or connected, to the second electromagnet unit, in the same manner.

A conductor of the first set of conductors of the first electromagnet unit may be coupled, or connected, in series with a conductor of the first set of conductors of the second electromagnet unit. For example, the second connector, or connector lead, of the conductor of the first set of conductors for the first electromagnet unit, may be electrically coupled, or connected, to the first connector, or connector lead, of the conductor of the first set of conductors of the second electromagnet unit.

In one embodiment, the second connector, or connector lead, of the conductor of the second set of conductors for the first electromagnet unit, may be electrically coupled, or connected, to the first connector, or connector lead, of the conductor of the second set of conductors of the second electromagnet unit. This means that the conductors of the first set of conductors of the first electromagnet unit and the second electromagnet unit are coupled in series.

The combined pattern, formed by superimposing of the first pattern on the second pattern, may have a width w1 and a length 11. The coupling, or connection, between two electromagnet unit may be made using wires or a connection bridge.

According to a second aspect, a system for improving or promoting plant growth or development is provided, the system comprising the electromagnet according to the first aspect, the system further comprising: a power source electrically coupled to the conductors of the first and the second set of conductors, wherein the current flowing through each conductor provides a magnetic field component in a Z-direction. In addition, the system with the electromagnet unit may provide a magnetic field in the XY-plane. Worded differently, the system with the electromagnet unit may provide a magnetic field in the X-direction as well as in the Y-direction. As discussed above in relation to the first aspect, the current generated in each conductor of the electromagnet unit of the system may form a magnetic field, and that the generated magnetic field is a combination of the magnetic fields from the individual conductors. The generated magnetic field is thus an artificial magnetic field, separate and/or distinct from the earth's magnetic field. It is understood that the generated magnetic field and the earth's magnetic field together form a joint, or combined, magnetic field. It further is understood that the joint, or combined, or resulting magnetic field may improve or promote plant growth, or development during at least some of the development stages of the plant.

The power source is a source of electric power that is coupled to the conductors of the first and the second set of conductors. The power source adapted for providing a direct current. The power source may be connected to mains power from a wall socket, or similar readily available source of power. The mains power may be alternating current (AC) or direct current (DC) power. The AC power may typically be 230V AC or 110V AC. However, when the power source provides power to plurality of electromagnet units, the mains power could be 380V, multi-phase, AC. The power source may comprise a converter for converting AC power to DC power. When the mains power is a DC power, the power supply may comprise a DC-to-DC converter, for converting high voltage DC to lower voltage DC. The power source may comprise a DC converter for converting alternating current, such as 230V, AC power to DC power of equal to or less than 50V, such as 24V or 48V.Alternatively, the power source comprises a battery, or similar means for storing and providing electric energy. The power source may electrically couple, or connect, to the conductors of the first and second set through the connectors, or lead connectors, or leads.

For example, the power source may be a DC power supply for providing a DC output power through positive and negative terminals, or connectors, comprising one or more positive voltage output terminals, and one or more negative terminals, or ground terminals. In one example, the power supply may comprise a first and a second voltage negative, or ground, terminal, and a first and a second positive voltage terminal. The first positive terminal may electrically couple to a first connector, or connector lead, of a conductor of the first set of conductors, through a wire, or cable. The second positive terminal may electrically couple to a first connector, or connector lead, of a conductor of the second set of conductors, through a wire, or cable.

Alternatively, the power source may be a DC power supply for providing a DC output power through negative and ground terminals, or connectors, comprising one or more negative voltage output terminals, and one or more ground terminals. This means that the current flow is reversed.

It is further understood that the DC power source may be a DC power supply for providing a DC output power through one or more positive terminals, one or more negative terminal and one or more ground terminals, or connectors.

The first negative terminal may electrically couple to either a second connector, or connector lead, of a conductor of the first set of conductors, through a wire, or cable. The second negative terminal may electrically couple to a first connector, or connector lead, of a conductor of the second set of conductors through a wire, or cable.

Alternatively, the second negative terminal may electrically couple to a second connector, or connector lead, of a conductor of the second set of conductors through a wire, or cable.

The output current and voltage of the power source may be controlled to adjust the magnetic field generated in the conductors of the first and second set. Worded differently, the power source may be adjustable, or variable, to output a constant current power of a specific form, such as current and voltage.

It is understood that the power source may be electrically and individually coupled to the conductors of the first and the second set of conductors. The power source may comprise a plurality of sets of positive and negative terminals with matching numbers of connectors, or lead connectors, for electrically couple each individual conductor of the first and second set to the power source. The currents flowing through each conductor of the first and second set may then be individually controlled or adjusted to further provide improve control of the generated, homogenous, or largely homogenous, magnetic field of the electromagnet unit, or units.

The system may comprise one or a plurality of electromagnet units electrically coupled to the power source. The power source may comprise communication means, such as a wired or wireless transceiver, configured to control with a computer system such as a server. The computer system may thus allow for sending and receiving control signals for managing a plurality of power sources. In addition, this may allow for monitoring of the currents and voltages, and in turn, the magnetic field generated by the electromagnet unit, or electromagnet units.

In a further embodiment the conductors of the second set may overlap the conductors of the first set. This means that a conductor of the second set of conductors extend over, crosses, or partly covers, a conductor of the first set of conductors. In one example each conductor of the second set may overlap all the conductors of the first set. The conductors of the first set and the second set may be electrically insulated from one another in the grid. This means that there is no electric contact between the conductor of the first set of conductors and the conductor of the second set of conductors in the grid. In other words, the overlapping relates to the positioning of the conductors and not to any electric contact between the conductors.

The conductors of the second set, or second pattern, may extend transversely to the conductors of the first set, or first pattern. Alternatively, the conductors of the first set may extend at a right angle in relation to the conductors of the second set. Right angle may be construed as an angle of 90 degrees between the conductors of the first set and second set. However, the angle between the conductors of the first and second set may be in a range, preferably in the range of 85-95 degrees or 87-93 degrees, more preferably 89-91 degrees.

It is further understood that the first pattern overlaid, or superimposed, the second pattern and/or the third pattern in this way may form a grid.

The grid may be rectangular. The grid may be square. The grid may be delimited, or defined, by the two outermost conductors of the first set of conductors and the two outermost conductors of the second set of conductors. Worded differently, the grid may be formed, or defined, by the first pattern and the second pattern of conductors. The grid may be a uniform grid, or the grid may be a non-uniform grid, depending on the distribution, or spreading out, of conductors of the first pattern and a second pattern.

The grid may comprise at least one grid square, or rectangle, wherein the grid square, or square, has an area in the XY-plane free of conductor intersects. It is understood that the first pattern superimposing the second pattern may form the grid in the XY-plane. By superimposing, the first pattern may be placed over, or on top of, the second pattern. The superimposing of the first pattern on the second pattern, should be interpreted as also encompassing the second pattern being imposed the first pattern.

For example, the first pattern may comprise two first set conductors that may extend in parallel and be distributed, or spread out, in the XY-plane. The two first set conductors may thus form the two outermost conductors of the first set, or first pattern. The second pattern may comprise two second set conductors that extend in parallel and be distributed, or spread out, in the XY-plane. The two second set conductors may thus form the two outermost conductors of the second set, or second pattern. By superimposing the first pattern on the second pattern, a single grid square may be obtained, the single grid square defined by four corners, each corner defined by a point, or position, wherein a conductor of the first pattern may overlap a conductor of the second pattern. Superimposing a first pattern comprising two conductors on a second pattern comprising two conductors, may thus define, or form, a grid having one grid square defined by four corners, corresponding to the point of conductor overlaps. It is understood that the number of corners may correspond to the number of conductors in the first pattern multiplied by the number of conductors of the second pattern.

It is further understood that each grid square, or rectangle, may define, or delimit an area, in the XY-plane, wherein the sides of the grid square, or rectangle, is formed by two conductors of the first set, and two conductors of the second set. The delimited area may be defined as being free of conductor intersects. Worded differently, no conductors may extend across the delimited area, or divide the area, of the grid square, or rectangle.

Arranging the conductors this way may allow for the magnetic field to be generated with a magnitude and/or density being higher along the edges, or borders, of the two patterns, or the grid, or the borders of the electromagnet unit.

It is understood that for the grid arrangement discussed above, the electromagnet unit may further comprise a linear, or straight, first connector, or connector lead, and a linear, or straight, second connector, or connector lead, that may extend in parallel with the conductors of the first pattern, and be arranged outwardly external the grid, wherein the first and second connector lead connect the conductors of the second set in parallel. The first and second connector leads may preferably be straight conductors. However, the connector leads may be curved, or wave-shaped, or other non-straight shapes. The first and second connector leads may extend parallel to the conductors of the first set. The first and second connector leads may be arranged outwardly and external to the outer most conductors of the first set of conductors. Worded differently, the first and second connector leads may be arranged outwardly external to the grid. The first and second connector lead thus do not form part of the conductors of the grid. The first and second connector leads may be coupled to the conductors of the second set. The first and second connector lead may couple parallel to the conductors of the second set. This is advantageous, since only two connector leads are used to provide power and current to the connectors of the second set.

The electromagnet unit may further comprise a linear, or straight, third connector, or connector lead, and a linear, or straight, fourth connector, or connector lead, that extend in parallel with the conductors of the second pattern, arranged outwardly external the grid, wherein the third and fourth connector lead may connect the conductors of the first set in parallel. The third and fourth connector leads may be straight. The third and fourth connector leads may extend parallel to the conductors of the second set. The third and fourth connector leads may be arranged outwardly and external to the outer most conductors of the second set of conductors. Worded differently, the third and fourth connector leads may be arranged outwardly external to the conductors of the grid. The third and fourth connector lead thus do not form part of the conductors of the grid. The third and fourth connector leads may be coupled to the conductors of the first set. The third and fourth connector lead may couple parallel to the conductors of the first set. This is advantageous, since only two connector leads are used to provide power and current to the connectors of the first set.

Alternatively, a subset of conductors of the first set may be coupled to a respective connector, or connector lead. Thus, a current of a subset of conductors of the first set may be controllable. The same arrangement may be made for the conductors of the second set.

### Brief description of the drawings

A more complete understanding of the abovementioned and other features and advantages of the proposed technology will be apparent from the following detailed description of preferred embodiments in conjunction with the appended drawings, wherein:
Fig. 1 is a perspective view of a system for promoting plant growth comprising an electromagnet unit and a power supply;
Fig. 2 is a view from above of a first embodiment of the electromagnet unit, having plurality of conductors arranged in a first pattern and a second pattern;
Fig. 3A shows a top view of the first conductors arranged to form the first pattern,
Fig. 3B shows a top view of the second conductors arranged to form the second pattern,
Fig. 4 shows a top view of a system with two electrically connected electromagnet units; Fig. 5 shows a connector arrangement for connecting two electromagnet units;
Fig. 6a is a cross-sectional view of an electromagnet unit comprising conductors arranged in a laminated support sheet;
Fig. 6b is a cross-sectional view of an electromagnet unit, comprising conductors arranged on top of a support sheet;
Fig. 7 is an alternative embodiment of an electromagnet unit;
Fig. 8 shows an alternative embodiment of two electromagnet units coupled or connected together;
Fig. 9 shows an alternative example of the system with two electrically connected electromagnet units of Fig. 4A;
Fig. 10A shows a top view of third conductors arranged to form the third pattern, and
Fig. 10B shows a top view of a third combined pattern.

### Detailed description of the drawings

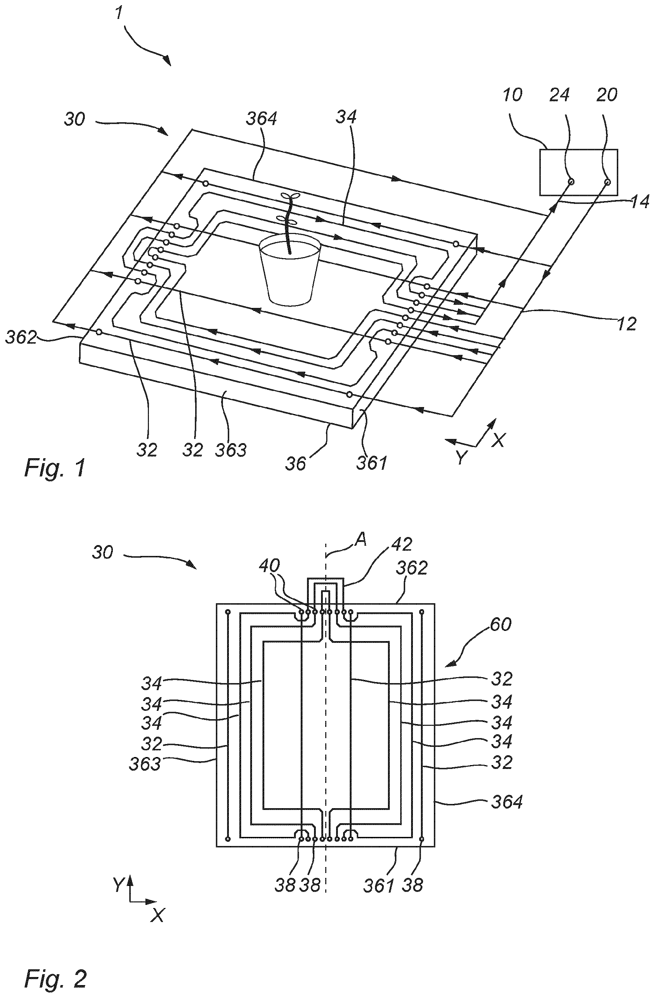

Fig. 1 shows a simplified perspective view of a system 1 for improving or promoting plant growth or development. The system 1 comprises a power supply 10 for providing direct current electric energy to one electromagnet unit 30. The electromagnet unit 30 comprises a plurality of conductors 32, 34, wherein the plurality of conductors are arranged in a first set 32 and a second set 34 of conductors, arranged in a XY-plane. Fig. 1 shows the conductors 32, 34 arranged on top of a support sheet 36, the support sheet forming a substrate 36 for the conductors of the electromagnet unit 30. In the example shown in Fig. 1, the substrate is a flexible plastic support sheet 36.

The conductors of the first set 32 are arranged in parallel, and distributed, or spaced out, in a first pattern, on the substrate 36. The conductors or the first set 32 are linear, or straight, and extend, or are arranged, in a first direction, or a Y-direction, of the XY-plane. The conductors of the second set 34 are distributed, or spread out, in a second pattern in the XY-plane. The first pattern and the second pattern form a combined pattern 60. The conductors of the first set 32 have identical lengths. The conductors of the second set 34 vary in length but match in shape. Fig. 1 shows that the conductors of the first set 32 are of the same type, having the same diameter and being of the same material. The conductors of the second set 34 are of the same type, having the same diameter and being of the same material.

The substrate 36 is shown to have a rectangular or square shape. The substrate has a first side 361, a second side 362, a third side 363 and a fourth side 364. The conductors of the first set 32 are electrically isolated from the conductors of the second set 34. The conductors of the first set 32 are shown overlapping the conductors of the second set 34.

The power supply 10 is electrically coupled to the conductors of the first and second set 32, 34 through wires, or cables, 12, 14. The wires 12, 14 allows for the power source to provide the conductors of the first and second set of conductors 32, 34 with direct current power. The power supply 10 is a DC power supply comprising a positive, or negative, voltage output terminal 20.

In addition, Fig. 1 shows the power supply 10 comprising a voltage negative, or ground, terminal 24. The positive terminal 20 electrically couples to a respective first wire 12 for providing positive DC power to the conductors of the first set and second set 32, 34. The power supply further electrically couples the negative terminal 24, or connector 24, to the conductors of the first set and second set 32, 34 through a second lead wire 14.

Fig. 1 further shows a pot 100, containing growth medium 102 in the form of soil 102, and a rooted plant 104 growing in the growth medium, under the influence of a common, or jointly, generated homogenous, or largely homogenous, magnetic field in a direction orthogonal, or a Z-direction, in relation to the XY-plane of the electromagnet unit 30, and the support sheet 36. The pot 100 thus form a growth medium support 100 for containing the soil 102, wherein the soil forms the growth medium 102.

Fig. 2 shows a top view of the electromagnet unit 30 of Fig. 1. Fig. 2 shows that the electromagnet unit 30 has four conductors of the first set of conductors 32. Fig. 1 also shows that the electromagnet unit 30 has 6 conductors of the second set of conductors 34. The first set of conductors 32 forms a first pattern and the second set of conductors forms a second pattern. The first and second pattern form a combined pattern 60. Each conductor of the first set and the second set has a first connector 38, or connector lead 38, and a second connector 40, or connector lead 40. The first connector 38 may be arranged at the first end of each conductor 32, 34, and the second connector 40 may be arranged at the second end, or opposite end, of each conductor 32, 34. Fig. 2 further shows a central axis that geometrically divides the electromagnet unit into a first and a second half.

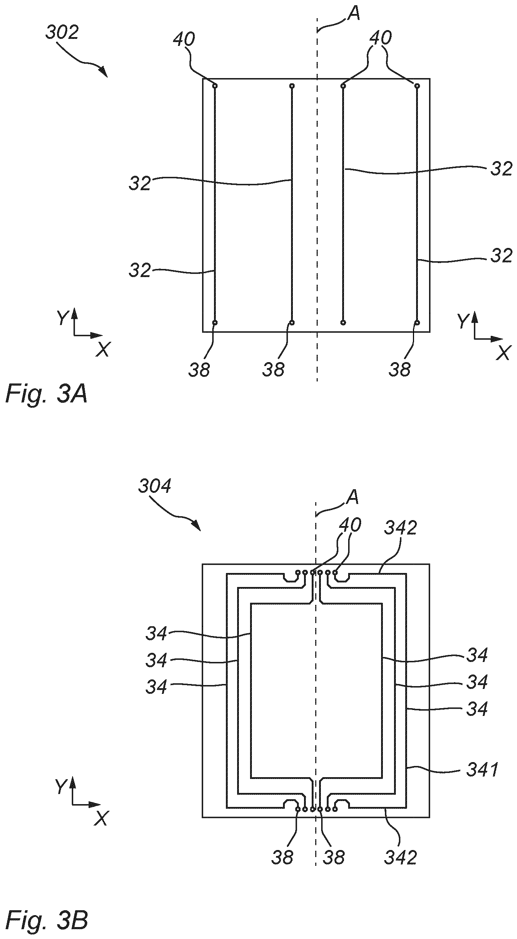

Fig. 3A shows a top view of the first conductors arranged, or positioned, to form a first pattern 302 and Fig. 3B shows a top view of the second conductors arranged, or positioned, to form a second pattern 304. Fig. 3A and 3B shows a central axis A that geometrically divides the respective pattern in two halves. Fig. 3A shows four conductors of the first set of conductors 32, arranged with two first conductors 32 arranged on the first, or left half, of the first pattern 302, and two first conductors 32 arranged on the second, or right half, of the first pattern 302. The first pattern 302 is defined by two outermost conductors, or furthest spaced apart conductors 32. Each first conductor has a first connector 38, or lead connector 38, and a second connector 40, or lead connector 40.

Fig. 3B shows the second pattern 304 formed by the conductors of the second set of conductors 34. The second pattern 304 comprises six distributed, or spaced apart, conductors 34. Each second conductor 34 has two first portions 342, or end portions 342, and one intermediate portion 341, or middle portion 341. Each second conductors 34 thus extend in both a first direction, or Y-direction, and a second direction, or X-direction.

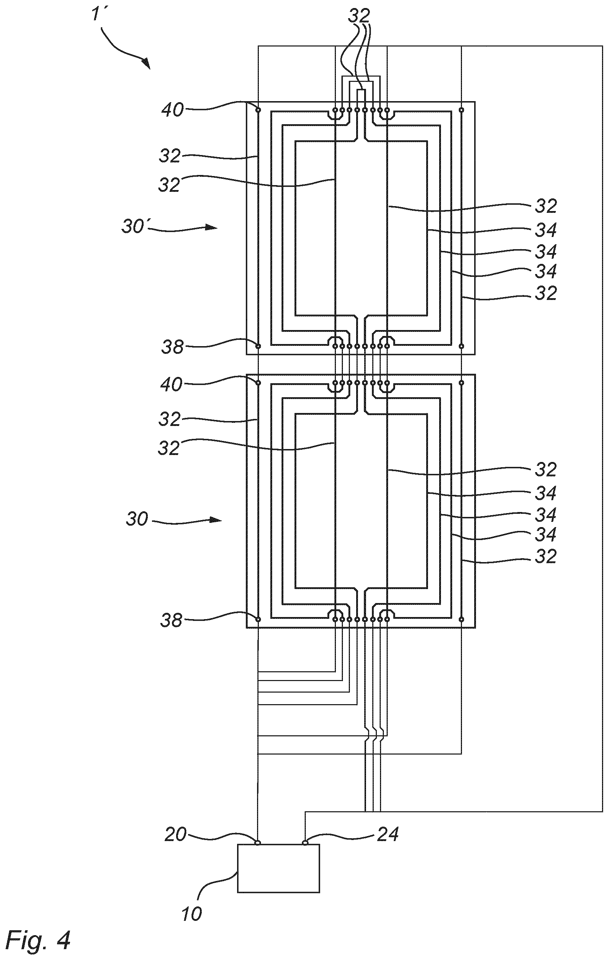

Fig. 4 shows a top view of a system with two electrically connected electromagnet units 30, that are electrically coupled, or connected, to a power source 10. Fig. 4 shows a first electromagnet unit 30, and a second electromagnet unit 30'. The positive terminal 20 of the power source 10 is coupled, or connected, to the first connecter 38, of each of the conductors of the first set of conductors 32. The second connector 40, or connector lead 40, of each of the conductors of the first set of conductors of the first electromagnet unit 30, is in turn connected to a respective first connector 38, of a conductor of the first set of conductors 32, of the second electromagnet unit 30'. Each connector 40, or connector lead 40, of the conductors of the first set of conductors of the second electromagnet unit 30' is coupled, or connected to the negative terminal 24 of the power source 10. The conductors of the first set of conductors of the first electromagnet are thus electrically coupled, or connected, in parallel. In extension a conductor of the first set of the first electromagnet unit 30 is coupled in series with a respective conductor of the first set of the second electromagnet unit 30'.

The positive terminal 20 of the power source 10 is further coupled, or connected, to the first connector 38, of half of the conductors of the second set of conductors 32 of the first electromagnet unit 30. Each second connector 40, or connector lead 40, of the conductors of the second set of conductors of the first electromagnet unit 30, is in turn connected to a respective first connector 38 of a conductor of the second set of conductors 32, of the second electromagnet unit 30'.

The second connectors 40 of the second set of conductors of the second electromagnet unit are coupled, or connected, by jumper wires 42, or jumper leads 42. Thereby each conductor of the second set 32 of the first electromagnet unit 30 is coupled, or connected, in series with a conductor of the second set 32 of the second electromagnet unit 30'.

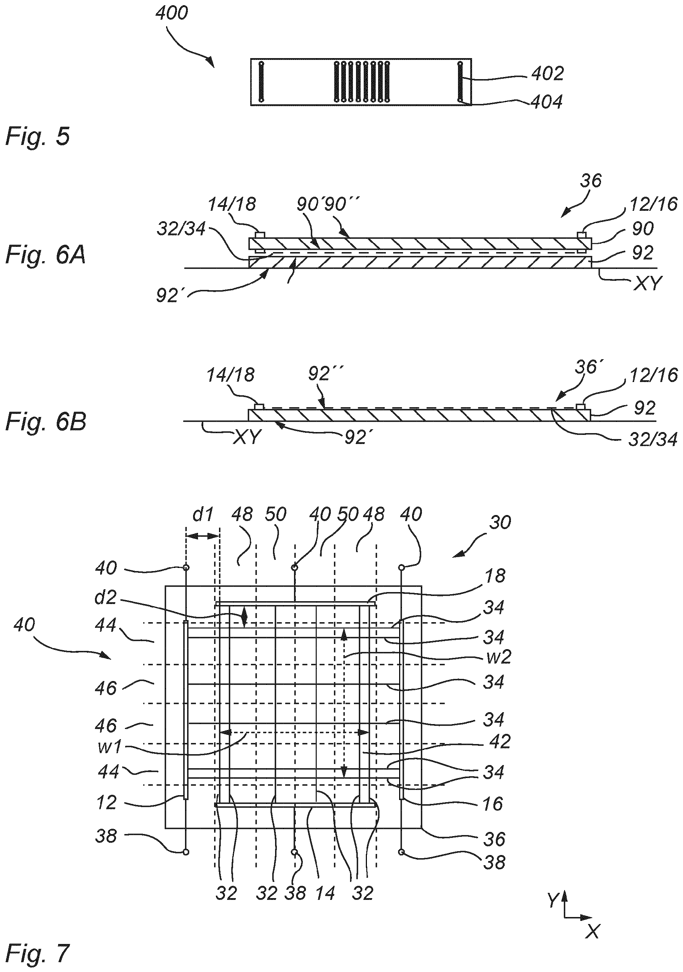

Fig. 5 shows a alternative connector arrangement 400 for coupling the first electromagnet 30 unit to the second electromagnet unit 30'. The connector arrangement 400 comprises a plurality of preconfigured leads 402 that extend between pins 404, or holes 404 arranged to receive a threaded bolt. The connector arrangement may be bolted, or fastened, to the substrate 36 and form an electrical connection between the first electromagnet 30 unit and the second electromagnet unit 30'.

Fig. 6a shows a cross-sectional view of an electromagnet unit 30 having a laminated support sheet 36, comprising a lower sheet 92 and an upper sheet 90. The substrate 36, or support sheet 36, is arranged to be placed on the XY-plane, or ground plane, having a lower surface 92' of the lower sheet 92 arranged and in contact with the XY-plane. The lower sheet 92 is shown comprising an oppositely arranged upper surface 92". The upper sheet 90 comprises a lower surface 90" facing the upper surface 92" of the lower sheet 92. The upper sheet 90 also comprises an upper surface 92'' arranged facing away from the lower surface 90' of the upper sheet 90. Arranged between the upper surface of the lower sheet and the lower surface of the upper sheet is shown a conductor 32/34. The conductor is coupled, or connected, to a connector 12 and 14. The connector extends through the upper sheet 90, between the lower surface 90' of the upper sheet 90 and the upper surface 90" of the upper sheet 90. Thereby, wires, or cables may be coupled to the connector 12 and/or 14, and provide a current flowing through the conductors 32, 34.

The upper sheet 90 is shown being laminated, to the lower sheet 92. The upper 90 and lower 92 sheet thereby provide a flexible support sheet 36 wherein the conductor is protected from mechanical wear or damage, such as resulting from placing a pot on the upper surface 90'' of the upper sheet 90.

Fig. 6b shows cross-sectional view of an alternative electromagnet unit 30, comprising a single support sheet 36'. The support sheet 36' comprises a lower sheet 92 but no upper sheet. The lower sheet 92 comprises a lower surface 92' arranged to be placed on a XY-plane, or ground plane. The support sheet 36' further comprises an opposite, upper surface 92". The conductor 32/34 are arranged to be placed on, or attached to, the upper surface 92" of the support sheet 36'. A first 12 and second 14 connector is connected to the conductor 32/34 at a first and a second end.

Fig. 7 shows a top view of an alternative electromagnet unit, wherein the electromagnet unit 30" has a plurality of conductors 32, 34 arranged in a first pattern 32 and a second pattern 34. The first and second pattern 32, 34 are shown placed on the substrate 36, or support sheet 36. The first pattern 32 is formed by a first set 32 of six conductors arranged in parallel, and distributed, or spaced out on substrate formed in the form of a support sheet, and in the example shown, as a flexible support sheet 36. The conductors of the first set 32 are at the ends, electrically coupled, or connected, to a respective third 14 and fourth 18 connector lead. The conductors of the first set 32 are thus electrically coupled in parallel between the third and fourth connector lead 14, 18.

Fig. 7 also shows the second pattern 34 formed by six parallel conductors of the second set 34 of conductors arranged, distributed, or spaced out, on the support sheet 36. The conductors of the second set 34 are at a respective end, electrically coupled, or connected, to a first 12 and a second 16 lead connector. Fig. 7 further shows that the connector leads each comprise an electric first connector 38 and a second connector 40, configured for making an electric coupling to form a closed circuit, or conduit, with a power supply 10.

Fig. 7 shows that the first pattern 32 and the second pattern 34 of conductors form a combined pattern 60, or grid 60. The grid 60 comprises a plurality of grid squares 42, or rectangles, or combination of squares and rectangles. Each grid square 42 is defined by four corners wherein conductors of the first pattern 32 overlap conductors of the second pattern 34. Each grid square 42 is further defined by sides formed by two first conductors 32 and two second conductors 34. The sides of the grid 60 thereby enclose, or limit, a grid square area 42. The area is free from, or devoid, of conductor intersects. Worded differently, each grid square 42 area is free from conductors 32, 34 extending across the area. Fig. 7 shows that the first pattern 32 and the overlaid, or superpositioned, second pattern 32 form twenty-five grids squares 42 of a plurality of different area sizes. The grid density is thereby non-uniform, or non-equal, wherein the grid size area varies throughout the grid 60. Worded differently, the conductors of the first 32 and second pattern 34 are distributed, or spaced out, unevenly thereby forming a grid 60 having different sized grid squares 42, or rectangles 42. The grid density, or conductor density of the grid 60, is thereby affected by the distribution, or spacing out, of the conductors of the first set 32, or first pattern 32, and the second set 34, or second pattern 34.

Fig. 7 shows in a first direction for the second set 34, or X-direction, pictured in dashed lines, a first and a second outer quarter portion 44, and two inner quarter portions 46. The first and the second outer quarter portion 44, as well as the two inner quarter portions 46 extend in parallel in the X-direction. The quarter portions 44, 46 each delimit the second set 34 in four quarter portions 44, 46. The inner portions 46 are arranged between the outer first 44 and second quarters portions 44. Fig. 7 shows that the number of conductors 34 of the inner quarter portions 46 and the outer first and second quarter portions 48 differ. The outer quarter portions 44 each comprises two conductors 34. Each inner quarter portion 48 comprises a single conductor 34. The density of conductors of a first or second outer quarter 44 portions is thus higher, or twice, the density of conductors 34 of an inner quarter portion 46. Fig. 7 further shows in a second direction for the first set 32, or Y-direction, pictured in dashed lines, a corresponding division of the first pattern 32 into four quarter portions 48, 50. Thus the density of the both the first 32 and second pattern 34 is higher in the outer quarter portions 44, 48, or along the outer borders, or edges of the grid 60. Arranging the conductors of the first 32 and second set 34, into the first 32 and second pattern 34, in this configuration provides for the conductors to generate a homogenous, or more homogenous, magnetic field in along the borders, or edges, of the grid 60.

Fig. 7 also show the arrangement of connector leads 12,14, 16, 18. A first and second connector leads 12, 16 each connect the ends of the conductors of the second set 34, or second pattern 34, in electrical parallel connection. A third 14 and fourth 18 connector leads each connect the ends of the conductors of the first set 32, or the first pattern 32, in electrical parallel connection. Thus, the current flowing through the conductors of the first set 32 are equal in magnitude, or size. The current flowing through the conductors of the second set 34 are equal in magnitude, or size.

Fig. 7 shows that the first 12 and second 16 connector lead is each configured with connectors 38 on both a first and a second end. The first connector lead 12 of a first electromagnet unit 30 can thereby be connected to a first connector lead of a second electromagnet unit. Alternatively, a single electromagnet unit may comprise a first and a second grid 60', electrically coupled to each other thereby forming an electromagnet unit comprising two grids 60, 60'.

Fig. 7 shows that the first 12 and/or second 16 connector lead is arranged at a distance d1 from an outermost conductor of the first set of conductors 32. Fig. 7 also shows that the first pattern 32 has a width w1. The width w1 is defined as the distance between the outermost, or furthest spaced apart, conductors of the first set 32. The width w1 is measured parallel to the conductors of the second set 34. The distance d1 may be expressed as a ratio of the width w1. The distance d1 is shown being about 20% of the width w1. Similarly, the third 14 and fourth 18 connector lead is shown arranged at a distance d2 from an outermost conductor of the second set 34.

Fig. 7 also shows that the second pattern has a width w2. The width w2 is defined as the distance between the outermost, or furthest spaced apart, conductors of the second set 34. The width w2 is measured parallel to the conductors of the first set. The distance d2 may be expressed as a ratio of the width w2. The distance d2 is shown being about 16% of the width w2.

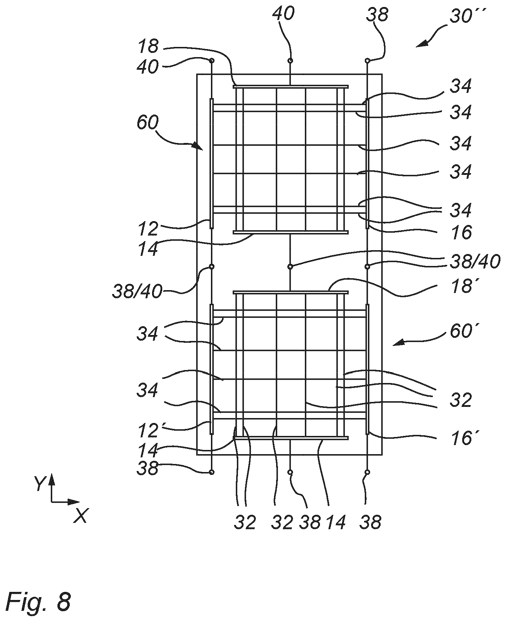

Fig. 8 shows a first grid 60 electrically coupled to a second grid 60'. The first 12, and second 16 connector lead of each grid 60, 60' is each configured with connectors 38 on both a first and a second end. The connectors 38 of the first connector lead 12 are on one end shown as being electrically coupled to a first connector lead 12' of the second grid 60'. In the same manner, the connector 38 of the second connector lead 16 is on one end shown as being electrically coupled to a second connector lead 16' of the second grid 60'. The conductors of the second set 34, or pattern 34, on the first and second grid 60, 60', are thus all electrically coupled in parallel. The current flowing in a connector of the second set 34 is thereby equal in both the first and second grid 60, 60'.

Fig. 8 shows that the fourth connector lead 18' of the second grid 60' is electrically coupled to the third connector lead 14 of the first grid 60. The currents flowing through the conductors of the first set 32, or pattern 32, of the first grid 60 are thus equal to the conductors of the first set 32, or pattern 32, in the second grid 60'.

For example, if the first connector lead 12, and the third connector lead 14 of the first grid 60 each is provided current from a power source of 6A, the resulting currents flowing through the conductors of the first set 32, or pattern 32, of both the first and second grid 60, 60' will be 1A, and the currents flowing through the conductors of the second set 34, or pattern 34, of both the first and second grid 60, 60' will be 0.5A. For the embodiment shown in Fig. 3, the currents of each conductor of the first set 32 is equal to the input current from a power source divided by the number of conductors of the first set 32 of one of the grids 60, 60'. The currents of each conductor of the second set 34 is equal to the input current from a power source divided by the total number of conductors of the second sets 34 of both of the grids 60, 60'.

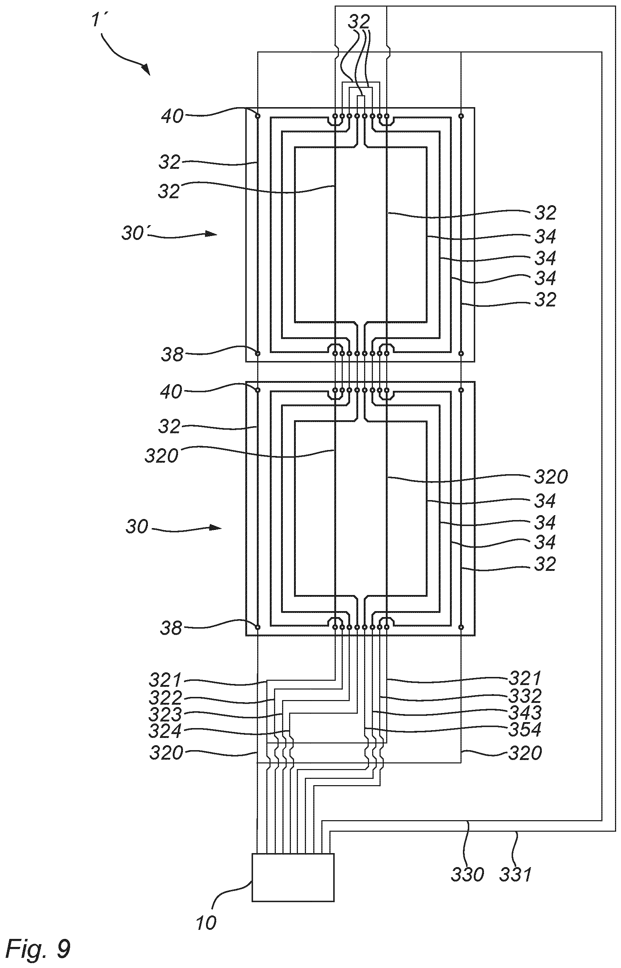

Fig. 9 shows an alternative example of the system with two electrically connected electromagnet units of Fig. 4A. The example of Fig. 9 differs from Fig. 4A in that, each conductor of the second set of conductors are coupled, or connected, to the power source via an individual power lead and return lead. Two conductors of the second set of conductors form a pair of second set of conductors, wherein the current flowing through the pair is equal, or the same. The pair of conductors of the second set of conductors are coupled, or connected, to the power source via a respective power lead 322, 323, 324 and a return lead 332, 343, 354. The current through each pair of second conductors is thereby adjustable, or pairwise adjustable.

Fig. 9 further shows that the conductors of the first set are pairwise coupled, or connected, in parallel via a power lead 320, 321 and a return lead 330, 331. Fig. 9 shows that power leads 320 are connected, or coupled, to a common, or joint power outlet on the power source, and that power leads 321 are connected, or coupled, to a common, or joint power outlet on the power source.

In the same manner, return leads 330, 331 are respectively coupled, or connected, to a common, or joint return outlet on the power source.

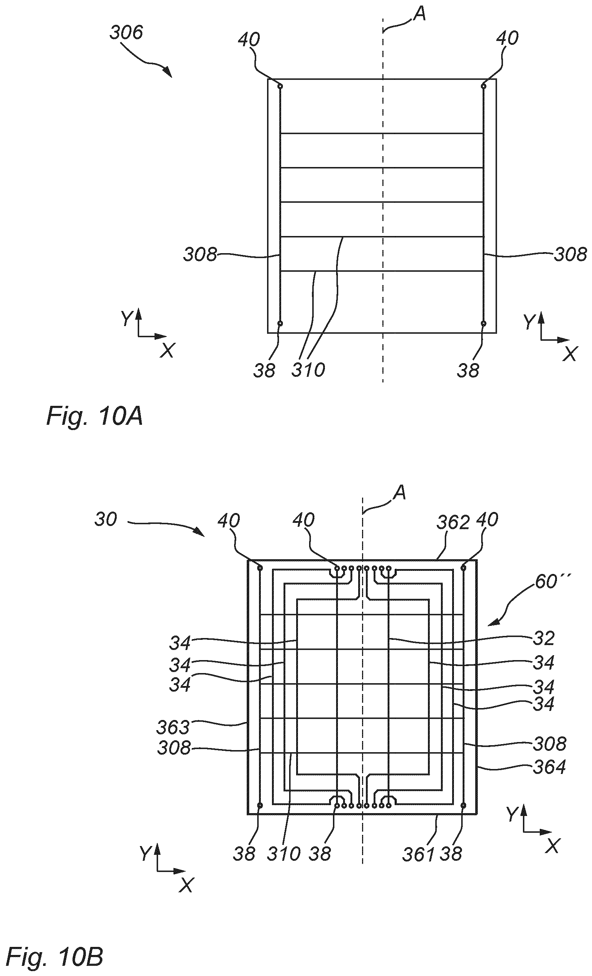

Fig. 10A shows a third set of conductors 310 that form a third pattern 306. Each conductor 310 of the third set of conductors, or third pattern 306, may be connected, or coupled, to a respective lead 308. The conductors 310 that form the third pattern 306 are thus coupled, or connected, in parallel. Each conductor 310 of the third set of conductors, or third pattern 306 extend in the X-direction.

Fig. 10B shows an electromagnet unit formed by the first pattern 304, second pattern 306 and third pattern 308 overlaid, or stacked, to form a combined pattern 60". The combined pattern 60" thus differs from the combined pattern 60, 60' in that it is formed by the first pattern 304, the second pattern 306 and the third pattern 308.

The conductors of the third set of conductors 310, or third pattern 308, overlap the conductors 32 of the first set and the conductors 32 of the second set of conductors. The electromagnet unit 30 formed by the combined pattern 60" can be connected to a further electromagnet unit 30 as shown in relation to Figs. 4 and 9.

## Claims

1. An electromagnet unit for improving or promoting plant growth or development, the unit comprising:
- a plurality of electric conductors, wherein the plurality of conductors extend, or are arranged, in a XY-plane, the plurality of conductors comprises, or is composed of,
a first set of conductors and a second set of conductors, wherein the first set of conductors extend in parallel and are distributed, or spread out, in a first pattern in the XY-plane, and the second set of conductors are distributed, or spread out, in a second pattern in the XY-plane,
- wherein the conductors of the first set are linear, or straight, and extend, or are arranged, in a first direction, or a Y-direction, of the XY-plane, and
- wherein the conductors of the second set are composed of a first part that extends in the first direction, and a part that extends in a second direction, or X-direction,
- wherein the second direction is transverse to, the first direction,
wherein the first pattern is super positioned the second pattern, and together define, or form, a combined pattern, in the XY-plane,
- wherein the conductors are electrically insulated from one another in the combined pattern,
- wherein the conductors are configured to be operationally coupled to an electric power source that generates a current in each of the conductors.

2. The electromagnet unit of claim 1, wherein each conductor of the second set comprises a linear, or straight,
intermediate portion that extends in the first direction, and two linear, or straight, end portions, arranged on opposite sides of the intermediate portion, wherein the end portions extend, or are arranged, in the second direction, or the X-direction, of the XY-plane.

3. The electromagnet unit of claim 1 or 2, wherein an outermost conductor of the first set of conductors, or first pattern, and an outermost conductor of the second set of conductors, or second pattern, are parallel and coincides.

4. The electromagnet unit of claim 3, wherein the plurality of conductors of the second pattern are non-uniformly distributed, or spaced apart, in the second direction between two outermost arranged conductors of the second pattern.

5. The electromagnet unit of claim 4, wherein the first pattern is divided by a center axis that is parallel to the conductors of the first set of conductors, and wherein the first conductor of the second set is arranged, or positioned, at a first side of the center axis and the second conductor of the second set of conductors is arranged on a second side of the center axis, opposite the first side.

6. The electromagnet unit of any claim 1-5, wherein each conductor of the first and second set are configured to carry a current in the range of 0.01-10A, preferably in the range of 0.01-6 A, more preferably in the range of 0.01-3 A.

7. The electromagnet unit of any claim 1-6, wherein each conductor of the first and second set of conductors has a resistance per meter below 0.3 Ohm/m, preferably below 0.03 Ohm/m, more preferably, below 0.003 Ohm/m.

8. The electromagnetic unit of claim 1-7, wherein each conductor of the first set of conductors and the second set of conductors comprises a first connector, or lead connector, and a second connector, or lead connector.

9. The electromagnet unit of claim 1-8, further comprising a third set of conductors, that are linear, or straight, and extend, or are arranged, in the first direction, or the second direction, that form a third pattern that together with the first pattern and the second pattern form the combined pattern.

10. The electromagnet unit of claim 1-9, wherein the combined pattern forms a multi-layer printed circuit board (PCB) wherein the first pattern of conductors is separated, or electrically insulated, from the second pattern of conductors by an insulating layer.

11. A system for improving or promoting plant growth or development, the system comprising the electromagnet unit any of claims 1-10, comprising:
a power source electrically coupled to the conductors of the first and the second set of conductors, wherein the current flowing through each conductor provides a magnetic field component in a Z-direction.

12. The system according to claim 11, wherein the power source is arranged to control a current and voltage of the conductors of the first and the second set, for altering the generated magnetic field in the Z-direction.

13. The system of claim 11-12, wherein the conductors of the first set are coupled in parallel.

14. The system of claim 11-13, wherein a first conductor of the second set of conductors is coupled in series with a second conductor of the second set of conductors.

15. The system of claim 11-14, wherein the first set of conductors are connected in parallel, and wherein a first conductor of the second set of conductors is connected in series with a second conductor of the second set of conductors.
